# EUROPEAN PATENT APPLICATION

(11) **EP 3 272 641 A1**
(43) Date of publication of application: **24.01.2018**
(21) Application number: 17182668.8
(22) Date of filing: 21.07.2017
(51) Int. Cl.: B64C 1/08, B64C 1/22

(54) **SPACE FRAME AIRCRAFT BRACING**

(30) Priority: 21.07.2016 US 201662365266 P; 24.05.2017 US 201715604249
(71) Applicant: The Boeing Company, Chicago, IL 60606-2016 (US)
(72) Inventor: KISMARTON, Max U, Chicago, IL Illinois 60606-2016 (US); GRIP, Robert E., Chicago, IL Illinois 60606-2016 (US)
(74) Representative: Boult Wade Tennant

(57) **Abstract**

Disclosed are structures and features of a space frame aircraft. In particular, this disclosure relates to bracing for a space frame aircraft.

## Description

### CROSS-REFERENCE TO RELATED APPLICATIONS

This application, under 35 U.S.C. § 119, claims the benefit of U.S. Provisional Patent Application Serial No. 62/365,266 filed on July 21, 2016, and entitled "Space Frame Aircraft Structures," the contents of which is hereby incorporated by reference herein.

### FIELD OF THE DISCLOSURE

This disclosure relates generally to structures and features of a space frame aircraft. In particular, this disclosure relates to bracing for a space frame aircraft.

### BACKGROUND

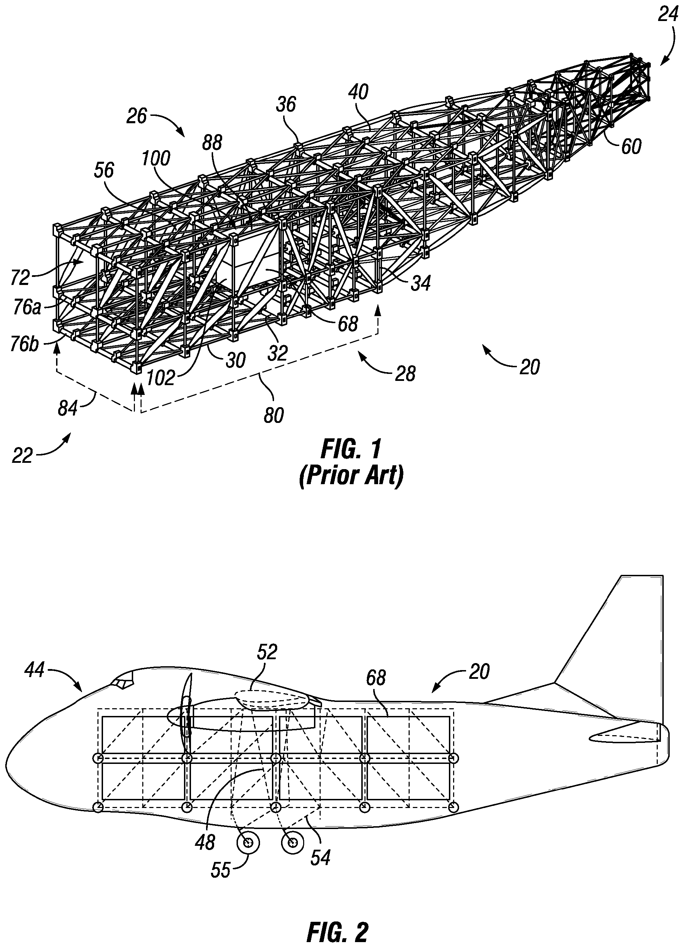

The statements in this section merely provide background information related to the present disclosure and may not constitute prior art. Space frame aircraft are known. For example, U.S. Pat. No. 7,891,608, titled "Space Frame Fuselage Structure And Related Methods," discloses embodiments of space frame aircraft and is hereby incorporated by reference in its entirety. In general, space frame aircraft may be used for, among other things, carrying cargo in one or more containers, such as an International Organization for Standardization ("ISO") shipping container. FIGS. 1-2 are schematic examples of portions of a space frame aircraft carrying a plurality of ISO containers.

In various configurations throughout this disclosure, a fuselage structure may accommodate inter-modal containers conforming to ISO specification 1496. ISO specification 1496 describes a family of inter-modal containers. Containers conforming to the foregoing specification have been commonly accepted throughout the world for surface vehicle use, *e.g.*, to transport cargo on large ships, trucks and trains. A related specification, ISO specification 8323, describes an air-compatible, lightweight container. Throughout this disclosure all of the family of containers meeting either specification are collectively referred to as "ISO containers."

Typically, a space frame fuselage structure of the aircraft may include a plurality of nodes and a plurality of elements connecting the nodes to form a space frame in which to carry cargo. As disclosed in U.S. Pat. No. 7,891,608, a space frame may generally include longitudinal elements (e.g., longerons), lateral elements, vertical elements, or other elements that are joined together at nodes. Diagonal elements (also referred to herein as trusses, braces, or bracing) may also be included and connected between nodes.

One implementation of a fuselage space frame is indicated generally in FIG. 1 by reference number 20. The space frame 20 has a front, rear, and right and left sides indicated generally by reference numbers 22, 24, 26 and 28 respectively. The space frame 20 includes a plurality of longitudinal elements 30, lateral elements 32 and vertical elements 34 joined at a plurality of nodes 36. A plurality of diagonal elements 40 are connected between some of the nodes 36. Also included, though not shown on FIG. 1, may be a number of pins or mechanisms that support ISO containers 68. In some embodiments, the pins or support mechanisms for the ISO containers 68 may be slightly displaced relative to the space frame 20 structural nodes 36 to allow for a more simple integration of the support mechanisms in the space frame structure 20. This offset feature may result in some amount of bending moment being sustained by the longitudinal members 30. For the purposes of this disclosure, the locations of the support pins will be shown as being coincident with the structural nodes 36. In some places on the figures, some nodes 36 are depicted with a larger dot which represents the nodes 36 that are connected or close to the pins that carry the ISO containers 68, and are thus places where loads (mostly vertical) are introduced into the truss. Both the depiction of coincident location of pins and nodes, and differing size dots, are for simplicity and are inconsequential to the concepts of the current disclosure.

The space frame fuselage structure 20 is included in a space frame aircraft 44 parts of which are shown schematically in FIG. 2. External struts 48 (shown in phantom) may optionally be used to link wings 52 of the aircraft 44 with a portion 54 of the fuselage in the vicinity of landing gear 55. In this disclosure, the terms "wing" and "wings" may be used interchangeably. Other portions of the space frame 20 include a cargo hold 56 and an aft fuselage portion 60. Of course, other features of aircraft 44 are also possible.

The cargo hold 56 is configured to hold one or more ISO containers 68 in one or more generally rectangular bays 72 defined by one or more decks 76a, 76b, a plurality of longitudinal columns 80, and a plurality of transverse rows 84. For example, as shown in FIG. 1, a two-high stack or block 88 of 20-foot long ISO containers are in the left-most row 84 in the third 20-foot long column 80 of a deck 76a of the space frame 20. It should be noted that a space frame 20 may have rows 84 of different lengths. For example, as shown in FIG. 1, the space frame 20 has four rows 84: two outer rows and two center rows which are longer than the outer rows by the length of two bays 72. Other row 84 configurations are also possible. Likewise, columns 80 may be of differing widths and sizes.

It also should be noted that the term "deck" as used herein does not necessarily denote the presence of a "floor" on which one may walk. In the FIG. 1 embodiment, the decks 76a, 76b do not include floor surfaces (except, e.g., for such surface areas as may be provided by longitudinal and lateral elements 30 and 32.) Rather, "deck" refers to a level of the aircraft 44 that supports the cargo containers 68 from below. Thus, e.g., in the aircraft 44 of FIG. 1, the deck 76a is an upper deck on which the containers 68 are supported above a lower deck 76b. Likewise in FIG. 1, the space frame 20 is open at the front end 22 to permit full-width loading of the cargo hold 56 as further described below. Other configurations are possible. It should be noted that the open nature of the space frame allows it to typically be non-pressurized during flight.

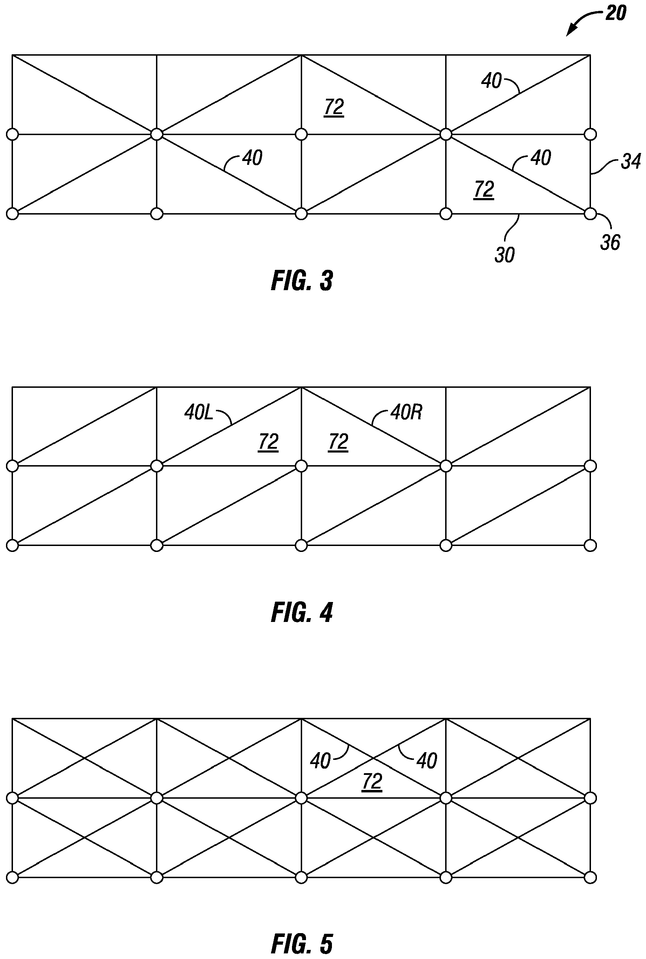

The word "bay" has two meanings in this document. The first meaning is the open volume within the fuselage for carrying cargo - the "cargo bay." The second meaning refers to the approximately rectangular shape formed by coplanar, approximately orthogonal primary space frame elements. Typically, in order to be structurally efficient, the diagonals 40 for a space frame 20 should be triangularized. One way to provide triangularization is to add diagonals 40 in some or all of the rectangular bays 72, as depicted in FIG. 3. For a general load condition, diagonals 40 must be capable of carrying tension or compression. The direction of the diagonals 40L, 40R in each rectangular bay 72 can be in either direction as shown in FIG. 4. Although various arrangements may be heavier or lighter than other arrangements, they will all work structurally. If so called X-bracing is utilized as shown in FIG. 5, the diagonals 40 can be designed to carry only tension, and not compression. This arrangement has the advantage that the diagonals 40 need not be designed for buckling, which allows for a much more slender diagonal 40. The disadvantage is that there are twice as many diagonals 40, and the behavior is non-linear if some diagonals buckle, and thus, more involved to analyze.

Using diagonals 40 with this basic space frame 20 as shown in FIGS. 3-4 results in very long diagonals 40 - approximately twenty-three feet for a conventional, ISO container 68 compatible, rectangular bay 72. These long diagonals 40 become heavy due to their need to resist buckling. Another disadvantage to the geometry illustrated in FIGS. 3-5 is that the angle the diagonals 40 make with the longitudinal elements 30 is smaller than desired. Because of this small angle, the forces in the diagonals 40 are larger than they would be if the angle were larger. Other drawbacks also exist.

### SUMMARY

Accordingly, the disclosed systems and methods address the above noted drawbacks and issues with existing systems and methods. Disclosed embodiments include systems and methods for bracing a space frame 20. Disclosed embodiments include a space frame for an aircraft including a bay sized to hold an ISO container and further including a first vertical element having a first end and a second end, a first longitudinal element having a length, a first node coupling the first end of the first vertical element to the first longitudinal element, a second node positioned along the first longitudinal element at a location that is a fraction of the first longitudinal element length, and a first brace extending from the second end of the first vertical element to the second node. In some embodiments, the location of the second node may be a location that is substantially half, one-third, or one-quarter of the length of the first longitudinal element.

Disclosed embodiments also include a second longitudinal element connected at a third node to the second end of the first vertical element, and a second brace extending between the second node and the second longitudinal element. In some embodiments, a second brace extends between the second end of the first vertical element to the first longitudinal element. In some embodiments, a second brace extends between the second node and the first vertical element. In some embodiments, a second brace extends between the first brace and the first vertical element. In some embodiments, a second brace extends between the first brace and the first longitudinal element. In some embodiments, the second brace is a tree structure. In some embodiments, the first longitudinal element is curved.

Disclosed embodiments also include a space frame cargo hold including a lower deck including a first transverse row of substantially rectangular bays and a second transverse row of substantially rectangular bays, an upper deck, above the lower deck, and including a first transverse row of substantially rectangular bays and a second transverse row of substantially rectangular bays, wherein each substantially rectangular bay is sized to hold an ISO container and includes a longitudinal element having a length and a vertical element, a first node connecting a juncture of the longitudinal element with the vertical element, a second node positioned along the longitudinal element at a location that is a fraction of the length of the longitudinal element, and a first brace extending from the vertical element to the second node. In some embodiments, the location of the second node is a location that is substantially half, one-third, or one-quarter of the length of the first longitudinal element.

In some embodiments, the substantially rectangular bay further includes a second brace extending between the first brace and the vertical element. In some embodiments, a second brace extends between the first brace and the longitudinal element. In some embodiments, the second brace comprises a tree structure. Other embodiments and modifications are also disclosed.

### BRIEF DESCRIPTION OF THE DRAWINGS

FIG. 1 is a perspective view of a space frame aircraft fuselage in accordance with embodiments of the disclosure.
FIG. 2 is a schematic side view of a space frame aircraft in accordance with embodiments of the disclosure.
FIG. 3 is a schematic side view of exemplary bracing in accordance with embodiments of the disclosure.
FIG. 4 is a schematic side view of exemplary bracing in accordance with embodiments of the disclosure.
FIG. 5 is a schematic side view of exemplary X-bracing in accordance with embodiments of the disclosure.
FIG. 6 is a schematic illustration of bracing with additional nodes in accordance with embodiments of the disclosure.
FIG. 7 is a schematic illustration of bracing with additional nodes in accordance with embodiments of the disclosure.
FIG. 8 is a schematic illustration of bracing with additional nodes in accordance with embodiments of the disclosure.
FIG. 9 is a schematic illustration showing bracing for mixed-length bays in accordance with embodiments of the disclosure.
FIG. 10 is a schematic illustration of additional bracing to divide the upper and lower longitudinal members into shorter lengths in accordance with embodiments of the disclosure.
FIG. 11 is a schematic illustration showing additional bracing supporting the center longitudinal element in accordance with embodiments of the disclosure.
FIG. 12 is a schematic illustration showing the division of the center longitudinal element into segments in accordance with embodiments of the disclosure.
FIG. 13 is a schematic illustration showing bracing of vertical elements at one or more locations along their length in accordance with embodiments of the disclosure.
FIG. 14 is a schematic illustration showing combination bracing for longitudinal elements or vertical elements in accordance with embodiments of the disclosure.
FIG. 15 is a schematic illustration showing combination bracing for longitudinal elements or vertical elements in accordance with embodiments of the disclosure.
FIG. 16 is a schematic illustration showing bracing tree structures in accordance with embodiments of the disclosure.
FIG. 17 is a schematic illustration showing no-compression, exterior bracing with curved longitudinal and vertical elements in accordance with embodiments of the disclosure.
FIG. 18 is a schematic illustration showing a detail of a curved longitudinal member in accordance with embodiments of the disclosure.

While the disclosure is susceptible to various modifications and alternative forms, specific embodiments have been shown by way of example in the drawings and will be described in detail herein. However, it should be understood that the disclosure is not intended to be limited to the particular forms disclosed. Rather, the intention is to cover all modifications, equivalents and alternatives falling within the spirit and scope of the invention as defined by the appended claims.

### DETAILED DESCRIPTION

It should be noted that, although implementations are described with reference to ISO containers 68 and/or reference to containers having specific dimensions, the disclosure is not so limited. The disclosure may be implemented in relation to many different types and/or sizes of containers.

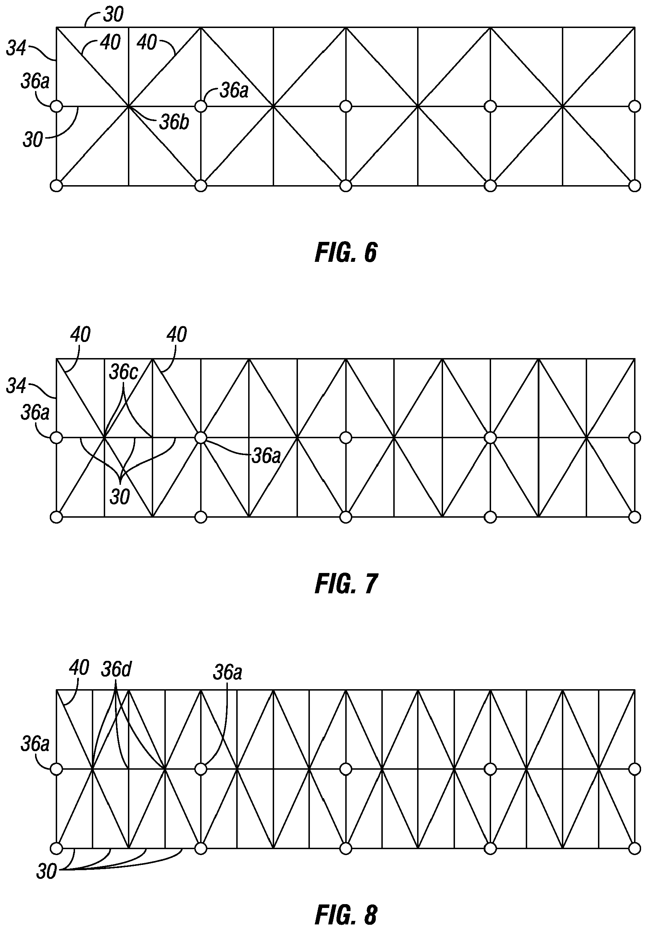

As noted above, the diagonals 40 for a space frame 20 presents several issues. One solution to the above-noted, and other, issues is to provide additional nodes 36b at substantially the midpoint between the original nodes 36a for each longitudinal element 30 as illustrated on FIG. 6. In this manner, the member lengths for the diagonals 40 can be greatly reduced.

In addition, the lengths of the longerons or longitudinal elements 30 in this arrangement are one-half those in the previous arrangement (e.g., compare FIG. 3, longitudinal elements approximately twenty feet, and FIG. 6 longitudinal elements approximately ten feet). Since the buckling load of a member in compression varies as the square of the length, this reduced length of the longitudinal elements 30 is advantageous.

Further, the lengths of the diagonals 40 in FIG. 6 are also greatly reduced to about sixty-five percent of their original twenty-three foot length shown in FIG. 3. This reduction in length for the diagonals 40 is also advantageous for the same reason as it is for the longitudinal elements 30.

In addition, the angle of the diagonals 40 in FIG. 6 is also improved over those in FIG. 3, which reduces the loads in the diagonals 40. These improvements result in a lighter-weight structure 20, which makes the single diagonal 40 in the configuration of FIG. 6 more favorable compared to the bracing arrangement in FIG. 3.

As shown in FIG. 7, additional nodes 36c may be provided substantially at the one-third distance between the original nodes 36a for each longitudinal member 30. As discussed above, the longitudinal member 30 lengths are further reduced. This arrangement also has an improved angle for the diagonals 40, which can result in a lower weight structure 20. Another advantage of this arrangement is that the skin panels attached to such a frame span much less distance and are, therefore, lighter. The size of such panels may be that each panel spans from one truss vertical member 34 to another, or they may span across multiple vertical members 34.

This approach can be extended as shown in FIG. 8. Additional nodes 36d are provided substantially at the one-fourth the distance between the original nodes 36a for each longitudinal member 30 and the lengths are further reduced. Likewise, the angle of the diagonals 40 is improved.

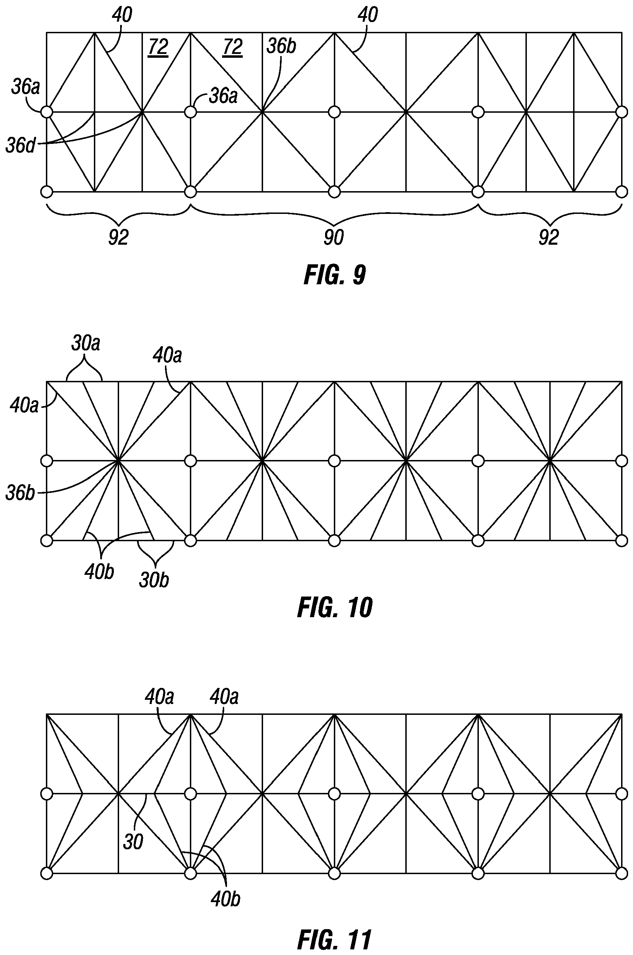

FIG. 9 is an embodiment showing diagonals 40 for mixed-length bays 72. For example, it may be advantageous in some embodiments for the fractional module spacing to be larger near the mid-length 90 of the fuselage where the shear forces are larger near the wing and main landing gear attachments, and smaller near the ends 92 of the fuselage where the shear loads may be smaller. This is because larger shear forces will necessitate members with larger cross sectional areas, which will naturally be able to have greater lengths for the same value of axial load. For example, the ends 92 of the fuselage may implement nodes 36d at one-third distance between the original nodes 36a and mid-length 90 of the fuselage may implement nodes 36b at one-half the distance between the original nodes 36a. Other combinations of spacing are also possible.

In some embodiments, additional bracing 40b may also be introduced in addition to the diagonals 40a to further divide the buckling length for various members. As used herein, a truss diagonal such as 40a carries shear loads that travel through the truss, by virtue of their being attached to nodes 36 where longerons 30, columns 34, and diagonal members 40 intersect. In contrast, "bracing" (like member 40b) are present for the purpose of providing support to another member to improve its buckling length. For example, FIG. 10 depicts additional bracing 40b along with the diagonals 40a to divide the upper 30a and lower 30b longitudinal members into two lengths each. These additional braces 40b carry either tension or compression.

In some embodiments, additional bracing 40b may also be introduced to support the central longeron or longitudinal elements 30. For example, FIG. 11 depicts the additional bracing 40b and diagonals 40a supporting the center longitudinal element 30. Since there is bracing 40b on both the upper and lower side of the longitudinal element 30, this bracing 40b need be capable of carrying only tension to adequately provide resistance to buckling for the longitudinal element 30. This arrangement is advantageous because the bracing 40b need not be designed for buckling.

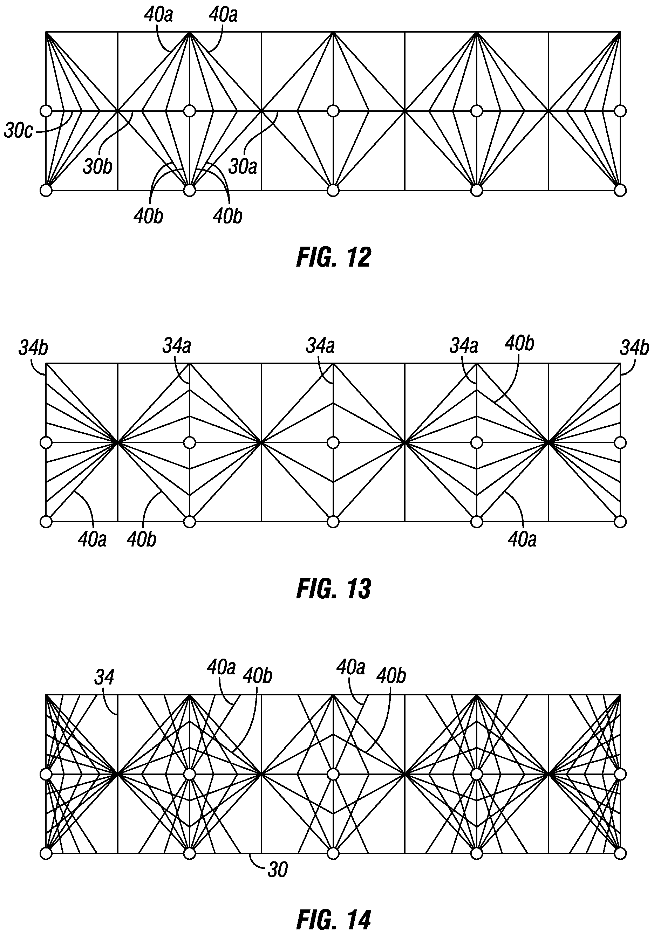

The bracing 40b need not be limited to dividing the longitudinal elements 30 into two segments. For example, FIG. 12 illustrates the division of the center longitudinal element 30a, 30b, and 30c into two, three, or four segments, respectively. The number of divisions can be specified for each longitudinal element 30 depending on, among other things, the loading requirements. For the same reasons as discussed above, more lightly-loaded longitudinal elements 30 may benefit from more bracing 40b locations compared to more heavily-loaded longitudinal elements 30, which may require less bracing 40b locations. Other configurations are also possible.

Likewise, columns or vertical elements 34 may be braced also. FIG. 13 is an example of diagonals 40a and bracing 40b showing how vertical elements 34 may be braced at one or more locations along their length. For example, the bracing 40b for the interior vertical elements 34a need carry only tension, while the diagonals 40a and bracing 40b for the exterior vertical elements 34b may take both tension and compression.

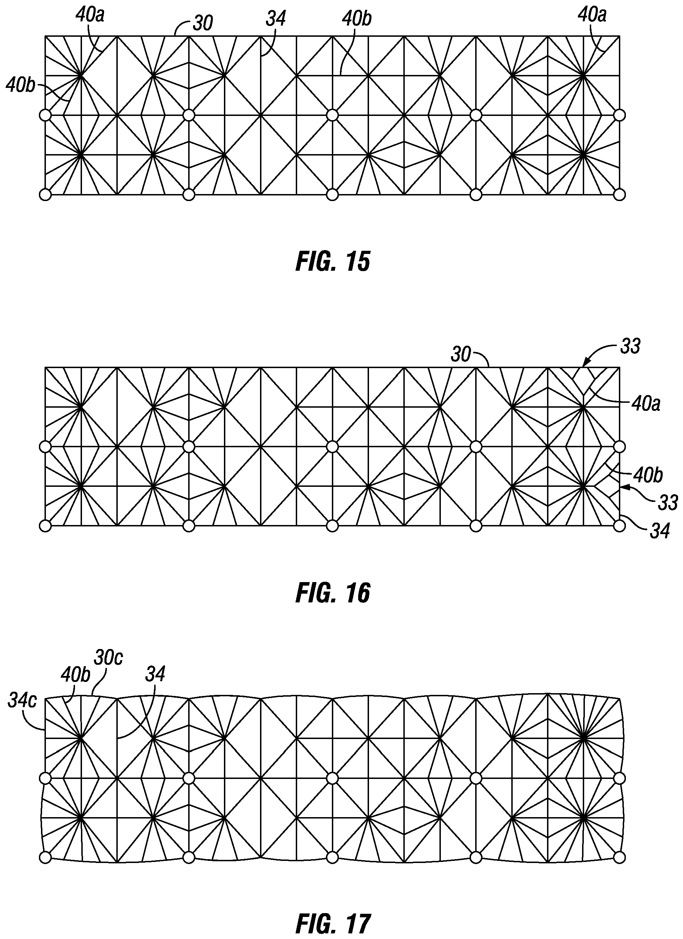

The diagonals 40a and bracing 40b arrangements depicted in FIGS. 10-13 can be combined in any combination for any longitudinal element 30 or vertical element 34, as shown in FIG. 14. Instead of having the large amount of overlap of diagonals 40a and bracing 40b shown in FIG. 14, it may be advantageous in some embodiments to arrange the bracing 40b as shown in FIG. 15. As in both FIGS. 14 and 15, some diagonals 40a can carry both tension and compression, while other bracing members 40b may carry only tension because they are arranged in pairs to brace the interior members (30, 34). The variety of the arrangement with some members (30, 34) braced with either one, two, or three diagonals and bracing members (40a, 40b) is intended to show the flexibility available to the structural designer. An actual structure may be much more uniform. Also, the number of diagonals and bracing members (40a, 40b) for a given member (30, 34) need not be limited to three.

In some embodiments, instead of arranging the tension/compression diagonals and bracing members (40a, 40b) such that they all originate from the intersection of the X-bracing for a given longitudinal element 30 or vertical element 34, they may be arranged in a "tree" structure 33 as shown in FIG. 16. The trunk of the tree 33 that connects to the center node of the X-bracing can be a more substantial cross section, which better resists buckling.

FIGS. 6-16 have illustrated the bracing concepts discussed in this disclosure by using the vertical elements 34 and longitudinal elements 30 in the XZ (longitudinal-vertical) plane. However, this concept is also applicable to the XY (longitudinal-lateral) plane using longitudinal elements 30 and lateral elements 32. Similarly, the disclosed concepts can be applied to YZ bracing as well. However, in some embodiments, bracing 40b at the forward and aft ends 92 of the ISO container-carrying portion of the space frame 20 may not need as much bracing since they are relatively heavily loaded. Other bracing configurations are also possible.

In some embodiments, it may be advantageous to implement bracing that does not need to sustain compression loads for the longitudinal 30, vertical 34, or lateral 32 members that are "exterior" members of the space frame 20. For example, diagonal 40a in FIGS. 15-16 is an example of exterior member bracing. One embodiment of no-compression, exterior bracing is to construct the longitudinal 30c and vertical 34c elements such that they are curved, as shown in FIG. 17. The curvature of the exterior longitudinal 30c or vertical 34c members may be very slight, and in FIG. 17 the curvature is exaggerated for illustrative purposes.

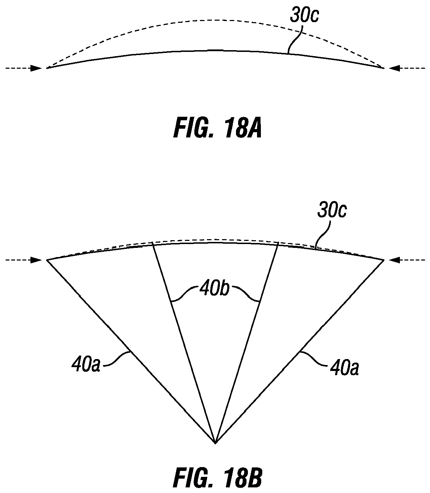

The concept is illustrated in FIG. 18, which is a diagram showing one longitudinal member 30c in closer detail. The upper portion of FIG. 18 shows that the curved longitudinal member 30c will tend to buckle in a direction away from the center of curvature, but not towards the center of curvature. Thus, to prevent buckling of such a longitudinal member 30c, the diagonals and bracing 40a, 40b need only be capable of resisting tension forces, because the longitudinal member 30c will not tend to buckle in a direction that would put the diagonals and bracing 40a, 40b into compression. The longitudinal member 30c is designed to have enough curvature to preclude buckling in the undesirable direction, but not so much curvature as to induce significant beam-longitudinal bending moments in the longitudinal member.
Further, the disclosure comprises emdoments according to the following clauses:
Clause A1. A space frame for an aircraft comprising:
   a bay sized to hold an ISO container and further comprising:
      a first vertical element having a first end and a second end;
      a first longitudinal element having a length;
      a first node coupling the first end of the first vertical element to the first longitudinal element;
      a second node positioned along the first longitudinal element at a location that is a fraction of the first longitudinal element length; and a first brace extending from the second end of the first vertical element to the second node.
Clause A2. The space frame for an aircraft of clause A1 wherein the location of the second node is a location that is substantially half of the length of the first longitudinal element.
Clause A3. The space frame for an aircraft of clause A1 or A2 wherein the location of the second node is a location that is substantially one-third of the length of the first longitudinal element.
Clause A4. The space frame for an aircraft of any of clauses A1 to A3 wherein the location of the second node is a location that is substantially one-quarter of the length of the first longitudinal element.
Clause A5. The space frame for an aircraft of any of clauses A1 to A4 wherein the bay further comprises:
   a second longitudinal element connected at a third node to the second end of the first vertical element; and
   a second brace extending between the second node and the second longitudinal element.
Clause A6. The space frame for an aircraft of any of clauses A1 to A5 wherein the bay further comprises:
   a second brace extending between the second end of the first vertical element to the first longitudinal element.
Clause A7. The space frame for an aircraft of any of clauses A1 to A6 wherein the bay further comprises:
   a second brace extending between the second node and the first vertical element.
Clause A8. The space frame for an aircraft of any of clauses A1 to A7 wherein the bay further comprises:
   a second brace extending between the first brace and the first vertical element.
Clause A9. The space frame for an aircraft of any of clauses A1 to A8 wherein the bay further comprises:
   a second brace extending between the first brace and the first longitudinal element.
Clause A10. The space frame for an aircraft of clause A8 wherein the second brace comprises a tree structure.
Clause A11. The space frame for an aircraft of clause A9 wherein the second brace comprises a tree structure.
Clause A12. The space frame for an aircraft of any of clauses A1 to A11 wherein the first longitudinal element is curved.
Clause A13. A space frame cargo hold comprising:
   a lower deck comprising a first transverse row of substantially rectangular bays and a second transverse row of substantially rectangular bays;
   an upper deck, above the lower deck, and comprising a first transverse row of substantially rectangular bays and a second transverse row of substantially rectangular bays;
   wherein each substantially rectangular bay is sized to hold an ISO container and comprises:
      a longitudinal element having a length; and
      a vertical element;
   a first node connecting a juncture of the longitudinal element with the vertical element;
   a second node positioned along the longitudinal element at a location that is a fraction of the length of the longitudinal element; and
   a first brace extending from the vertical element to the second node.
Clause A14. The space frame cargo hold of clause A13 wherein the location of the second node is a location that is substantially half of the length of the first longitudinal element.
Clause A15. The space frame cargo hold of clause A13 or A14 wherein the location of the second node is a location that is substantially one-third of the length of the first longitudinal element.
Clause A16. The space frame cargo hold of any of clauses A13 to A15 wherein the location of the second node is a location that is substantially one-quarter of the length of the first longitudinal element.
Clause A17. The space frame cargo hold of any of clauses A13 to A16 wherein the substantially rectangular bay further comprises:
   a second brace extending between the first brace and the vertical element.
Clause A18. The space frame cargo hold of any of clauses A13 to A17 wherein the substantially rectangular bay further comprises:
   a second brace extending between the first brace and the longitudinal element.
Clause A19. The space frame cargo hold of clause A17 wherein the second brace comprises a tree structure.
Clause A20. The space frame cargo hold of clause A18 wherein the second brace comprises a tree structure.
Clause B1. A space frame for an aircraft comprising:
   a bay sized to hold an ISO container and further comprising:
      a first vertical element having a first end and a second end;
      a first longitudinal element having a length;
      a first node coupling the first end of the first vertical element to the first longitudinal element;
      a second node positioned along the first longitudinal element at a location that is a fraction of the first longitudinal element length; and a first brace extending from the second end of the first vertical element to the second node.
Clause B2. The space frame for an aircraft of clause B1 wherein the location of the second node is a location that is half of the length of the first longitudinal element.
Clause B3. The space frame for an aircraft of clause B1 or B2 wherein the location of the second node is a location that is one-third of the length of the first longitudinal element.
Clause B4. The space frame for an aircraft of any of clauses B1 to B3 wherein the location of the second node is a location that is one-quarter of the length of the first longitudinal element.
Clause B5. The space frame for an aircraft of any of clauses B1 to B4 wherein the bay further comprises:
   a second longitudinal element connected at a third node to the second end of the first vertical element; and
   a second brace extending between the second node and the second longitudinal element.
Clause B6. The space frame for an aircraft of any of clauses B1 to B5 wherein the bay further comprises:
   a second brace extending between the second end of the first vertical element to the first longitudinal element.
Clause B7. The space frame for an aircraft of any of clauses B1 to B6 wherein the bay further comprises:
   a second brace extending between the second node and the first vertical element.
Clause B8. The space frame for an aircraft of any of clauses B1 to B7 wherein the bay further comprises:
   a second brace extending between the first brace and the first vertical element.
Clause B9. The space frame for an aircraft of any of clauses B1 to B8 wherein the bay further comprises:
   a second brace extending between the first brace and the first longitudinal element.
Clause B10. The space frame for an aircraft of clause B8 wherein the second brace comprises a tree structure.
Clause B11. The space frame for an aircraft of clause B9 wherein the second brace comprises a tree structure.
Clause B12. The space frame for an aircraft of any of clauses B1 to B11 wherein the first longitudinal element is curved.
Clause B13. A space frame cargo hold comprising:
   a lower deck comprising a first transverse row of rectangular bays and a second transverse row of rectangular bays;
   an upper deck, above the lower deck, and comprising a first transverse row of rectangular bays and a second transverse row of rectangular bays;
   wherein each rectangular bay is sized to hold an ISO container and comprises:
      a longitudinal element having a length; and
      a vertical element;
   a first node connecting a juncture of the longitudinal element with the vertical element;
   a second node positioned along the longitudinal element at a location that is a fraction of the length of the longitudinal element; and
   a first brace extending from the vertical element to the second node.
Clause B14. The space frame cargo hold of clause B13 wherein the location of the second node is a location that is half of the length of the first longitudinal element.
Clause B15. The space frame cargo hold of clause B13 or B14 wherein the location of the second node is a location that is one-third of the length of the first longitudinal element.
Clause B16. The space frame cargo hold of any of clauses B13 to B15 wherein the location of the second node is a location that is one-quarter of the length of the first longitudinal element.
Clause B17. The space frame cargo hold of any of clauses B13 to B16 wherein the rectangular bay further comprises:
   a second brace extending between the first brace and the vertical element.
Clause B18. The space frame cargo hold of any of clauses B13 to B17 wherein the rectangular bay further comprises:
   a second brace extending between the first brace and the longitudinal element.
Clause B19. The space frame cargo hold of clause B17 wherein the second brace comprises a tree structure.
Clause B20. The space frame cargo hold of clause B18 wherein the second brace comprises a tree structure.

Although various embodiments have been shown and described, the present disclosure is not so limited and will be understood to include all such modifications and variations are would be apparent to one skilled in the art.

## Claims

1. A space frame (20) for an aircraft comprising:
a bay sized to hold an International Organization of Standardization (ISO) container (68) and further comprising:
a first vertical element having a first end and a second end;
a first longitudinal element having a length;
a first node coupling the first end of the first vertical element to the first longitudinal element;
a second node positioned along the first longitudinal element at a location that is a fraction of the first longitudinal element length; and
a first brace extending from the second end of the first vertical element to the second node.

2. The space frame (20) for an aircraft of claim 1 wherein the location of the second node is a location that is substantially half of the length of the first longitudinal element.

3. The space frame (20) for an aircraft of claim 1 or 2 wherein the location of the second node is a location that is substantially one-third of the length of the first longitudinal element.

4. The space frame (20) for an aircraft of claim 1, 2 or 3 wherein the location of the second node is a location that is substantially one-quarter of the length of the first longitudinal element.

5. The space frame (20) for an aircraft of any of claims 1-4 wherein the bay further comprises:
a second longitudinal element connected at a third node to the second end of the first vertical element; and
a second brace extending between the second node and the second longitudinal element.

6. The space frame (20) for an aircraft of any of claims 1-5 wherein the bay further comprises:
a second brace extending between the second end of the first vertical element to the first longitudinal element.

7. The space frame (20) for an aircraft of any of claims 1-6 wherein the bay further comprises:
a second brace extending between the second node and the first vertical element.

8. The space frame (20) for an aircraft of any of claims 1-7 wherein the bay further comprises:
a second brace extending between the first brace and the first vertical element.

9. The space frame (20) for an aircraft of any of claims 1-8 wherein the bay further comprises:
a second brace extending between the first brace and the first longitudinal element.

10. The space frame (20) for an aircraft of claim 8 or 9 wherein the second brace comprises a tree structure (33).

11. The space frame (20) for an aircraft of any of claims 1-8 wherein the first longitudinal element is curved.

12. A space frame (20) cargo hold comprising:
a lower deck (76b) comprising a first transverse row of substantially rectangular bays and a second transverse row of substantially rectangular bays;
an upper deck (76a), above the lower deck (76b), and comprising a first transverse row of substantially rectangular bays and a second transverse row of substantially rectangular bays;
wherein each substantially rectangular bay is sized to hold an International Organization of Standardization (ISO) container (68) and comprises:
a longitudinal element having a length; and
a vertical element;
a first node connecting a juncture of the longitudinal element with the vertical element;
a second node positioned along the longitudinal element at a location that is a fraction of the length of the longitudinal element; and
a first brace extending from the vertical element to the second node.

13. The space frame (20) cargo hold of claim 12 wherein the location of the second node is a location that is substantially half of the length of the first longitudinal element.

14. The space frame (20) cargo hold of claim 12 or 13 wherein the location of the second node is a location that is substantially one-third of the length of the first longitudinal element.
